(19) Europäisches Patentamt
European Patent Office
Office européen des brevets

(11) **EP 3 786 845 B1**

(12) **EUROPEAN PATENT SPECIFICATION**

(45) Date of publication and mention
of the grant of the patent:
**06.05.2026  Bulletin 2026/19**

(51) International Patent Classification (IPC):
***G06V 10/77*** *(2022.01)*     ***G06F 18/21*** *(2023.01)*

(21) Application number: **19194305.9**

(52) Cooperative Patent Classification (CPC):
**G06V 10/7715; G06F 18/2185;** G06V 20/52;
G06V 20/56; G06V 2201/03

(22) Date of filing: **29.08.2019**

(54) **DIFFICULTY-ADAPTIVE TRAINING FOR MACHINE LEARNING MODULES**

SCHWIERIGKEITSADAPTIVES TRAINING FÜR MASCHINENLERNMODULE

FORMATION D'ADAPTATION AUX DIFFICULTÉS POUR MODULES D'APPRENTISSAGE MACHINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.03.2021  Bulletin 2021/09**

(73) Proprietor: **Robert Bosch GmbH
70442 Stuttgart (DE)**

(72) Inventors:
• **Zhang, Dan
71229 Leonberg (DE)**
• **Beluch, William Harris
70469 Stuttgart (DE)**
• **Pfeiffer, Michael
71032 Boeblingen (DE)**
• **Patel, Kanil
70188 Stuttgart (DE)**

(56) References cited:
**US-A1- 2018 373 963     US-A1- 2019 122 120**

• **VALENTIN LEVEAU ET AL: "ADVERSARIAL
AUTOENCODERS FOR NOVELTY DETECTION",
INTERNATIONAL CONFERENCE ON LEARNING
REPRESENTATIONS (ICLR), 21 February 2017
(2017-02-21), XP055469416, Retrieved from the
Internet <URL:https://openreview.net/pdf?
id=SyuncaEKx> [retrieved on 20180423]**

## Description

The invention relates to a training of machine learning modules for purposes such a classification that is particularly suitable for safety-critical applications with highly variable uncertainties.

Background

For the automation of many safety-critical tasks, such as the at least partially automated driving of a vehicle in road traffic, the use of trainable machine learning modules is envisaged. For example, such modules may take in physical measurement data from the environment surrounding the vehicle and classify objects, such as road markings, road signs, pedestrians, or other vehicles. The bonus of using such modules is that based on a training on a finite number of situations, the vehicle can be reasonably expected to behave correctly even in situations that have not been part of the training. In this sense, the training process may be considered akin to the training process for human drivers. A human driver spends only a few tens of hours at the wheel during training, but is then expected to handle any unexpected situation that may come up in a lifetime.

For this and other safety-critical applications, it is crucial to know the uncertainties of the output of the machine learning module. Such uncertainties may, for example, be caused by a poor quality of the physical measurement data (such as poor visibility conditions), by an inherent difficulty of recognizing certain objects in certain situations (such as a car that is being partly occluded by a truck), or even by deliberate manipulation of road signs or the camera with "adversarial" patterns that may trick the machine learning module into a wrong classification.

US 2019/122 120 A1 discloses a method for augmenting a training data set for a generative adversarial network (GAN). For augmentation, samples generated by the generator, as well as unlabeled samples from the training dataset, may be used.

US 2018/373 963 A1 discloses an image classification system that aggregates the outputs of two distinct classifiers. One classifier is a common instance classifier that is trained to identify and recognize commonly occurring objects. The other classifier is a rare instance classifier that is trained to compute rarity scores representing likelihoods that an input image is correctly classified by the common instance classifier.

Summary of the invention

The invention is defined by the appended claims. Embodiments and examples not covered by the claims are presented to illustrate, and facilitate the understanding of, the claimed invention.

Disclosure of the invention

The invention provides a method for obtaining and/or augmenting a training data set for a machine learning module that is to map input data to output data which is meaningful with respect to a given to-be-solved problem. One prime example of such a problem is the classification of objects from physical measurement data.

The term "machine learning module" shall specifically comprise modules that embody a function that is parametrized with adjustable parameters and ideally has a high power to generalize. When the machine learning module is trained, the parameters may specifically be adjusted such that when training input values are fed into the module, associated ground truth labels are reproduced as exactly as possible. Specifically, the machine learning model may comprise, or be, an artificial neural network.

In the course of the method, samples of training input data are provided. Each such sample is associated with a label. This label constitutes "ground truth" with respect to the to-be-solved problem. I.e., if the machine learning module maps a sample of training input data to output data that corresponds to the label of this sample (e.g., it maps photo of a stop sign to "stop sign"), then this is deemed to be meaningful with respect to the given problem.

From the samples of training input data and the associated labels, a difficulty function that is configured to map a sample of training input data, or a representation thereof in a working space, onto a measure for the difficulty of evaluating this sample with respect to a given problem. For example, the difficulty may be a measure for the uncertainty that arises when classification of objects is to be performed on physical measurement data.

As mentioned above, the reasons why the difficulty may vary are numerous. For example, as every human driver knows, it is harder to recognize objects at a distance at night or in heavy rain. The recognition of objects may also be impeded by motion blur of camera pictures in a situation where the lighting is marginal and the vehicle is moving very fast. Even under optimal conditions, some objects have an inherent potential to be confused with each other. For example, in Germany, the green light of a set of traffic lights may be in the form of an arrow pointing to the right to indicate that a right turn is allowed and unimpeded in the sense that no one else (such as pedestrians) is allowed to cross the path of a vehicle making a right turn. But there is also a similar sign that has a very different meaning. A fixed sign with a green arrow pointing to the right painted on it may be fixed next to the red light. This indicates that a right turn is allowed even if the red light is on, but that all vehicles that do so must stop first and also watch out for crossing traffic. I.e., when the red light is one for one direction, other vehicles in the perpendicular directions have the green light, and if one such vehicle is oncoming from left to right, no right turn on red is possible despite the green arrow on the sign.

A danger of confusion may also be caused by the introduction of new traffic signs. For example, in Germany, the recently introduced "Umweltzone" sign designates zones where only vehicles meeting certain low-emission criteria are allowed to pass. It consists of a red circle with the black word "Umwelt" inside and the black word "Zone" below the circle. The layout of the sign is the same as that of the long-known "30 km/h zone" sign; the only difference is that "Umwelt" instead of a large number "30" is inside the circle. The downside of re-using the layout is therefore that the two signs may be confused.

At least one candidate sample of training input data, and/or a representation thereof in the working space, is obtained. By means of the difficulty function, a measure for the difficulty of evaluating this candidate sample, and/or the representation thereof in the working space with respect to the given problem is calculated. In response to this difficulty meeting a predetermined criterion, the candidate sample is included in the training data set.

Here, the working space may be any space in which the obtaining or the evaluating of the difficulty function is easier, faster, more accurate or advantageous in any other way. For example, if the to-be-solved problem is classification, it may be advantageous to choose a working space where samples belonging to a same class cluster and where the clusters are separated from one another.

The advantageous effect of this method is two-fold.

First, during collection of physical measurement data for training, some situations may occur more often than others. For example, if the data is collected by a camera mounted on a vehicle, traffic signs will appear with a frequency distribution that corresponds to that of their use in the area where the data is gathered. This frequency distribution is presently dictated by the needs of human drivers and, in many ways, not optimal for training a machine learning module that recognized objects. For example, the stop sign and the yield sign are designed with distinct shapes so that their meaning may be recognized even under most adverse circumstances (such as being completely covered by snow). The machine learning module may need only a few samples of those under different imaging conditions before it can be trusted to recognize these important signs all the time. But those signs are among the most frequently used ones, so that they appear in the data set much more often than it would be necessary. On the other hand, there are many signs that do appear much less frequently, but are very important nonetheless. The sign that indicates a railway crossing, as well as the sign that warns a driver not to drive off a pier into the water, are examples of such signs. According to the method described above, if there are already enough training input data to recognize stop signs and yield signs, and the next training image with a stop sign or yield sign is fed into the training, then the difficulty function will rate the difficulty of this training image to be very low, and the redundant training image will not make it into the final training data set. On the other hand, if the training has only encountered very few warning signs for piers so far, the next image with such a sign will receive a very high difficulty rating. Consequently, it is very likely to be accepted in the final training data set.

That is, the composition of the training data set may be better tailored to what is actually needed in order to become better. New training data may be specifically chosen to address the weak points of the learning. At the same time, redundant information may be eliminated from the training data set. A given accuracy may be achieved with a smaller training data set and with less training time than it was previously possible.

Second, the difficulty ratings produced by the difficulty function may be used to improve the self-assessment of the machine learning module regarding the uncertainty of its output. In safety-critical applications, the uncertainty of the output of the machine learning module may be at least as important as the output itself. For example, a high uncertainty may indicate that the output should not be trusted at all. As it will be discussed below in more detail, an accurate quantification of the uncertainty may be used to trigger many useful actions to cope with that uncertainty. For example, if visibility turns bad, data from a radar sensor may be used to supplement the data from a camera. In the worst case, the machine learning module may indicate that it cannot handle situation appropriately, and ask a human operator for help or remove an at least partially automated vehicle from the running traffic.

As discussed before, in a particularly advantageous embodiment, the to-be-solved problem comprises mapping each record of input data to a record of output data that indicates, for each class of a set of multiple discrete classes, a probability and/or a confidence that the record of input data belongs to the respective class. The difficulty function may then comprise training, based on the samples of training input data and the associated labels, a discriminative classifier that maps a sample of training input data, and/or a representation thereof in the working space, to a classification indicative of a probability and/or a confidence that this sample of training input data belongs to each of the discrete classes. The difficulty determined by the difficulty function then depends on this classification.

Here, the term "record" is not to be understood as requiring that "records" are of a fundamentally different data types than "samples". Rather, both live in the same space. The term "record" is the more generic term, and a "sample" is a special kind of record that is part of a training data set, or being evaluated for inclusion in a training data set. In the field of machine learning, the term "sample" is to express that a finite training data set is being used to sample an unknown ground truth data distribution.

By training the discriminative classifier, the machine learning module sort of "learns how to learn". Once the discriminative classifier is set up, further candidate samples of training input data may be checked against the predetermined criterion for the difficulty that is, by virtue of the training of the classifier, tied to the to-be-solved problem of the machine learning module. These candidate samples may come from any source. For example, if new training data is acquired by driving around with a vehicle and recording images with cameras mounted on the vehicle, then the whole stream of images may be tested against the criterion for the difficulty. Only images that meet the criterion may then be selected for inclusion in the training data set. In this manner, a first comb-out of a large quantity of newly acquired physical measurement data (such as images) may be performed in a manner that is well-motivated using a quantitative criterion tied to the to-be-solved problem. This is different from what would be done if the first comb-out were entrusted to humans. For example, when images are to be classified, features that make the classification of the images more difficult are not necessarily so visually prominent in the image that this would catch the attention of a human. It is even possible to deliberately impede the classification of an image by a machine learning module, by introducing inconspicuous modifications that cause the classification to be altered ("adversarial examples").

In a particularly advantageous embodiment, the difficulty determined by the difficulty function is based at least in part on an ambiguity of the classification. For example, if the output of the discriminative classifier is a softmax score, the mass distribution of this score among the possible classes is indicative of an ambiguity. If the mass of the softmax score is concentrated on a specific subset of the classes, whereas all other classes receive only little of the total mass, then this indicates a specific ambiguity between the classes in the specific subset. In order to train the machine learning module to better resolve such ambiguities, the training data set may be deliberately enriched with samples that are on the borderline between classes. The machine learning module may learn a lot more from samples of this kind than it can learn from clear-cut examples of the respective classes only. The situation is akin to learning how to fly an airplane. The crucial part is not learning how to conduct a routine flight. Rather, the crucial part is handling all sorts of emergencies where the right action will restore control of the airplane, the wrong action will doom the airplane, and it is not immediately obvious which action is the right one.

Another measure that the difficulty function may use is the entropy of the classification. If the entropy of a softmax score is high, then this is another special case of ambiguity, with the difference that many classes may be involved. Also, it may not even be discernible which class is preferred by the softmax score.

In a further particularly advantageous embodiment, the candidate sample is associated with a label corresponding to the classification determined by the discriminative classifier. In this manner, the uncertainty of the classification in the finally trained machine learning module may be determined with a much better accuracy, counteracting the tendency of machine learning modules to become "over-confident".

When training data is labelled, this is typically performed by human work, which may make the labelling the most expensive step of all in the workflow. For example, humans are given images and the task to annotate certain objects or features that appear in the images. Humans are good at classifying whether a certain object is present in an image or not, but a determination of the difficulty is hard to quantify and very subjective. Therefore, in most previously used training data sets, the labels were "one-hot" or "hard" encodings that assign exactly one class to each sample of training input data, no matter how easy or how difficult it actually was to arrive at the choice of this label. By contrast, the new label that has been determined using the discriminative classifier is a "soft" label in the sense that it may comprise values in a continuous interval, e.g., between 0 and 1. Since the classification that was determined by the discriminative classifier is also used for determining the difficulty, the new "soft" labels reflect the difficulty. This will reduce the confidences of classifications made by the machine learning module.

In a further particularly advantageous embodiment, the working space is chosen such that: the similarity of samples of training input data with respect to the given problem is correlated to the same or a higher degree to the distance between representations of these samples in the working space than it is correlated to the distance between these samples. For example, by choosing an appropriate working space, representations of samples of training input data may form clusters that correspond to the available classes of the classification.

This in turn makes the working space a particularly valuable tool for deliberately procuring samples of training input data with certain properties as to the difficulty that will be encountered when classifying them using the machine learning module. In a further particularly advantageous embodiment, a search is performed within the working space for a candidate representation of a candidate sample of training input data. The search is guided by the difficulty function that, in this example, is operating in the working space. The candidate representation is obtained from the working space such that the difficulty determined by the difficulty function meets the predetermined criterion. This obtained candidate representation is then transformed into a candidate sample that may then be added to the training data set.

How exactly the candidate representation may be transformed into a candidate sample depends on the concrete choice of the working space and on the concrete method chosen for creating this working space. In a further particularly advantageous embodiment, based on the samples of training input data, an encoder for transforming these samples into representations in the working space and a decoder for reconstructing these samples from the representations are trained together. The training is performed with the objective that the result of the reconstructing best matches the respective samples from which they were ultimately derived. By training an encoder-decoder architecture in this manner, a working space is automatically created based on the representations that the trained encoder produces from the samples of training input data. In other words, based on the training input data, a data manifold is learned, and a search for representations with the desired properties as to the difficulty may be performed on this manifold. At the same time, the decoder allows to directly transform a found candidate representation into the sought candidate sample of training input data.

In particular, a representation of a given sample of training input data in the working space is likely to be of a lesser dimensionality, i.e., to be characterized by a lesser number of elements, than the sample itself. The representation is then a compressed one, and the search space forms sort of an "information bottleneck" between the encoder and the decoder. Creating such an "information bottleneck" is one possible way of causing the similarity of samples of training input data with respect to the given problem to be correlated to a higher degree with the distance between these representations in the working space. In other words, if samples of training input data are similar with respect to the given problem, then their representations in the working space tend to move together. If the samples are dissimilar with respect to the given problem, then their representations in the working space tend to move apart.

For example, a generative adversarial network based on a variational autoencoder (VAE-GAN) may be used. This arrangement comprises an encoder $E_\varphi(z \mid x)$ that maps samples x of training input data from a data acquisition space X to representations z in a working space Z. The arrangement further comprises a decoder $G_\varphi(x' \mid z)$ that maps representations z from the space Z to samples x' of training input data back in the data acquisition space X. The arrangement further comprises a discriminator $D_\omega(X)$ that assesses whether a sample from data acquisition space X that it has been given is a real sample x of training input data that has always been residing in this space X, or whether it is the final result x' of a transformation from space X to space Z and back to X by the VAE-GAN. The encoder, the decoder and the discriminator are trained together. The ensemble of the encoder and of the decoder strives to produce ever better "fake" samples x', whereas the discriminator strives to improve its ability to distinguish the "fake" samples x' from the real samples x. After the training of the VAE-GAN has been completed, the x' are indistinguishable from the x, so when a candidate representation z in space Z has been found as a result of a search, the back-transformed sample x' in space X may be used as a training sample for training the machine learning module just like any other real training sample.

The discriminative classifier $C_\gamma(y \mid z)$ that maps samples z in space Z to classes y may be trained after the training of the encoder-decoder architecture. However, it is advantageous to train the discriminative classifier and the encoder-decoder architecture simultaneously. This allows the encoder and the decoder to speed up the training process. Alternatively, the classifier may also take the form $C_\gamma(y \mid x')$, i.e., it may work on reconstructed samples x'.

In a further particularly advantageous embodiment, the performing of the search comprises: obtaining, based on a representation in the working space, a candidate representation by solving an optimization problem in the working space with respect to a merit function, wherein the merit function is based at least in part on the difficulty function.

In this manner, a new sample of training input data that suits a particular purpose may be obtained relatively quickly, provided that a suitable merit function is available. By virtue of the optimization, it is already guaranteed that this new sample will meet the predetermined criterion as to the difficulty according to the difficulty function.

For example, given a sample x that is associated with a class label y, this may be transformed into a representation z by the encoder $E_\varphi(z \mid x)$. A new representation z' that lies on a class boundary of the current class y with another class y' ≠ y may then be obtained by solving the following optimization ("class targeted perturbation"):

$$z' = z + \arg\min_\delta \sum_{i=1}^{c} -y'_i \log C_\gamma(z+\delta)_i$$

The obtained z' may then be transformed into the sought new sample x' by means of the decoder $G_\varphi(x' \mid z)$. This new sample x' exhibits properties from at least two classes, and the soft label (i.e., a softmax output of the discriminative classifier $C_\gamma$) reflects this by distributing most of the mass across those two or more classes.

In another example, given a sample x with or without a label, this may be transformed into a representation z by the encoder $E_\varphi(z \mid x)$ again. A new representation with maximum entropy may then be obtained by solving the following optimization:

$$z' = z + \arg\min_\delta \sum_{i=1}^{c} \left(-C_\gamma(z+\delta)_i \log C_\gamma(z+\delta)_i\right)$$

The obtained z' may again be transformed into the sought new sample x' by means of the decoder $G_\varphi(x' \mid z)$. This

new sample x' exhibits features from possibly multiple classes and has a very high entropy.

In another particularly advantageous embodiment, the performing of the search comprises drawing random representations from the working space and evaluating whether these random representations meet the predetermined criterion. This may involve drawing many samples and checking them one by one, so it may be computationally intensive. But it opens a path to determine new samples that meet difficulty criteria for which no merit function is available. For example, in safety-relevant applications, a concrete difficulty function and criterion for the difficulty may be dictated by regulatory constraints, so it is not possible to replace them with something that is more tractable with a merit function.

The invention also provides a method for training a machine learning module. This method starts with obtaining and/or augmenting a training data set using the method described above. After that, trainable parameters of the machine learning module are optimized. The samples of training input data are processed by the machine learning module to yield output data. The parameters of the machine learning module are optimized such that the output data best match the respective labels associated with the samples of training input data. In this manner, the knowledge in the enriched training data set, namely how unclear and ambiguous situations should be handled, is transformed into a behavior of the machine learning module that generalizes this knowledge to new situations that occur during the use of the machine learning module in its intended application.

As discussed before, evaluating physical measurement data that have been acquired by sensors is an important domain of application for machine learning modules that have been acquired by at least one sensor. The invention therefore also provides a method for evaluating physical measurement data.

In the course of this method, a machine learning module is provided. The machine learning module is trained using the method described above. The physical measurement data is acquired using the at least one sensor. The physical measurement data is provided to the trained machine learning module as input data. The trained machine learning module maps the input data to output data and associated uncertainties.

Many efforts have been made in the art to improve the accuracy of the output data. But specifically for safety-critical applications, accurate knowledge of the uncertainty may be at least as important as the output data (such as a classification of objects in an image) itself. What is most desired in this context is that the uncertainty determined within the machine learning module actually matches the accuracy of the output data, i.e., that the self-assessment of the machine learning module about its own situation-dependent accuracy is correct. If this is the case, the uncertainty of the machine learning module is said to be "calibrated". Based on such a calibrated uncertainty, appropriate action can be taken in technical systems that rely on the output data of the machine learning module. A training data set produced by the method described above permits the machine learning module to achieve such calibration in training.

In a particularly advantageous embodiment, an actuation signal is calculated from the output data determined by the machine learning module according to a strategy, and this actuation signal is supplied to a vehicle, to a classification system, to a security surveillance system, to a quality control system, and/or to a medical imaging system. The strategy depends on the uncertainties associated with the output data.

For example, such a strategy may be more conservative if the uncertainty is high and relying on output data that then turn out to be incorrect or inappropriate might have adverse consequences. In the example of an at least partially automated vehicle, different strategies may be appropriate depending on how certain the classification of objects on the road in front of the vehicle is. If the object is classified as a carton or other piece of junk that any human driver would run over, and this classification is highly certain, then it is appropriate for the vehicle to continue at the present speed and run the object over. Braking sharply might come as a complete surprise to other drivers, potentially causing a rear-end collision. If the object is something any human driver would brake for (such as a hard object that would do damage to the vehicle), and this classification is highly certain, then a full application of the brakes is appropriate because it is most likely to avert damage. But if the classification is uncertain, it is more appropriate to adopt a strategy that is likely to avert damage even in the case that the classification is wrong. For example, the brakes may be applied with a milder deceleration that allows other drivers to react, and at the same time a free path around the object may be computed to be prepared in case it turns out that the object should not be run over.

The determined uncertainty may also be proactively used in order to improve the further training of machine learning modules for the concrete application. In a further particularly advantageous embodiment, in response to the uncertainty produced from at least one record of input data meeting a predetermined criterion, the record of input data may be stored in a memory for later analysis and/or labelling. Alternatively or in combination, it may be determined that the record of input data corresponds to a corner case with respect to the problem to be solved by the machine learning module.

For example, when images for the further training of machine learning modules are gathered by a camera mounted on a vehicle, it is desirable to specifically capture data from which the machine learning module can still learn something new. When the vehicle is driven to capture data, it is only possible to a limited extent to deliberately provoke the appearance of such situations in the data. Rather, one can only wait for such situations to occur. By monitoring the uncertainty, it is possible to discover on-line whether a new record of input data is one from which the future training of a machine learning module may benefit. It is therefore possible to discard data that is not interesting for further training right away, so as not to overwhelm the limited storage capacity on board the vehicle. The data that are found to be interesting may, for example, be labelled later by human experts or sent to a labelling service. These resources are expensive, so it is advantageous to focus their use on the interesting records of input data only.

In a further specially advantageous embodiment, physical measurement data is acquired by means of multiple distinct sensors that, for example, may acquire the measurement data by means of different physical modalities. For example, a camera that senses visible light may be combined with radar, ultrasonic or LIDAR sensors.

Physical measurement data from each of the sensors is provided to the trained machine learning module as input data. For the data from each sensor, respective output data and uncertainties corresponding to each sensor are obtained from the machine learning module. The respective output data are fused to a final result based at least in part on the respective uncertainties.

In this manner, the different sensors may pool their capabilities, so as to finally arrive at output data and actuation signals produced from such output data that are appropriate for the situation sensed by the sensors in a wider class of situations.

For example, if a camera image is used as a primary source of information for at least partially automated driving of a vehicle, situations may arise where the image is not really conclusive and the uncertainty is high. There may be bad lighting, or objects may be partially occluded by other objects. In such a situation during real-time driving, there is no time for a detailed analysis what is wrong with the camera image and which other sensor may be used to correct this concrete deficiency. By comparing the uncertainties, irrespective of what exactly has caused the data from one sensor to become inconclusive, it may be automatically determined which sensor supplies the most usable information for the assessment of the situation at hand.

Specifically, this also provides an automatic fail-over in case of an attack with adversarial patterns. Such adversarial patterns are carefully crafted to cause variations in the input data that in turn provoke a misclassification. It is unlikely that one and the same adversarial pattern will be able to change the input data captured by different physical contrast mechanisms in the same manner to provoke exactly the same misclassification, while at the same time remaining inconspicuous to a human. For example, an adversarial sticker fixed to a stop sign may cause a camera-based object detection to misclassify the stop sign as a "70 km/h speed limit" sign. But this sticker will be completely invisible to the radar sensor that still detects an octagon made of metal.

The methods described above may be wholly or partially computer-implemented. The invention therefore also relates to a computer program with machine-readable instructions that, when executed by one or more computers, cause the one or more computers to perform one or more of the methods described above. In this sense, electronic control units for vehicles and other devices that are able to execute programmed instructions are understood to be computers as well.

The computer program may be embodied on or in a non-transitory storage medium of any kind, and/or as a downloadable product. A downloadable product is a product that may be purchased and immediately delivered via a network connection, so as to eliminate the need for physical delivery of a tangible medium.

Furthermore, a computer may be provisioned with the computer program, with the non-transitory storage medium, and/or with the downloadable product.

In the following, further advantageous options are described together with the preferred embodiments of the invention using Figures.

Embodiments

The Figures show:

Figure 1 Exemplary embodiment of method 100 for obtaining and/or augmenting a training data set 11*;

Figure 2 Relationship between data acquisition space X and working space Z, 20;

Figure 3 Exemplary smooth transition between classes "6" and "0" of MNIST image dataset;

Figure 4 Exemplary embodiment of method 200 for training machine learning module 1;

Figure 5 Exemplary embodiment of method 300 for evaluating physical measurement data 3a;

Figure 6 Exemplary ambiguous candidate samples 15 with high ambiguity for inclusion in the training data set 11*;

Figure 7 Exemplary improvements of calibration of confidence C against accuracy A, measured on the E-MNIST data set (Figure 7a), on the Fashion MNIST data set (Figure 7b) and on the MNIST data set (Figure 7c).

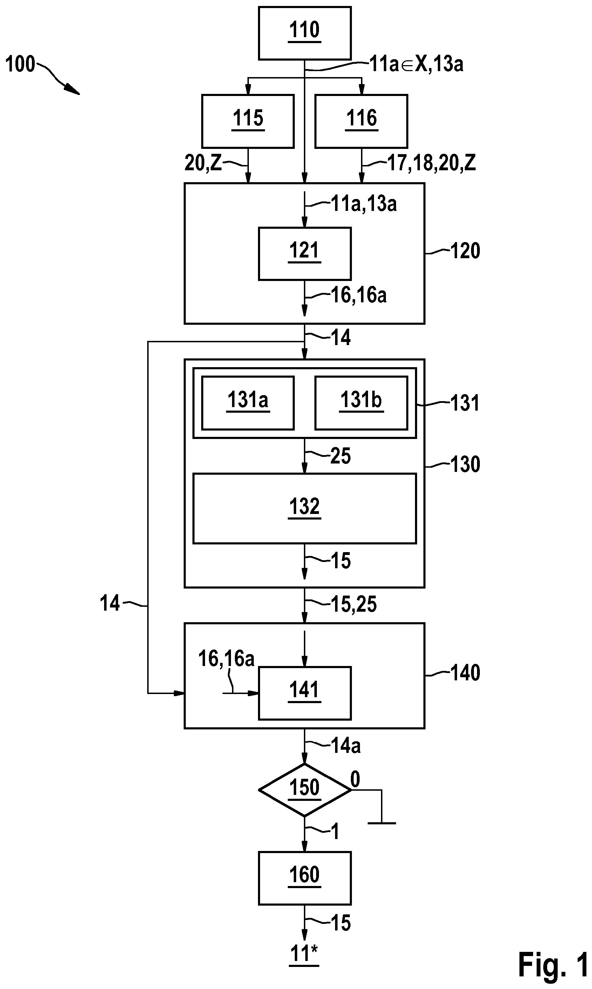

Figure 1 is a flow chart of an exemplary embodiment of the method 100 for obtaining and/or augmenting a training data set 11*. In step 11, samples 11a of training input data that are associated with labels 13a are provided.

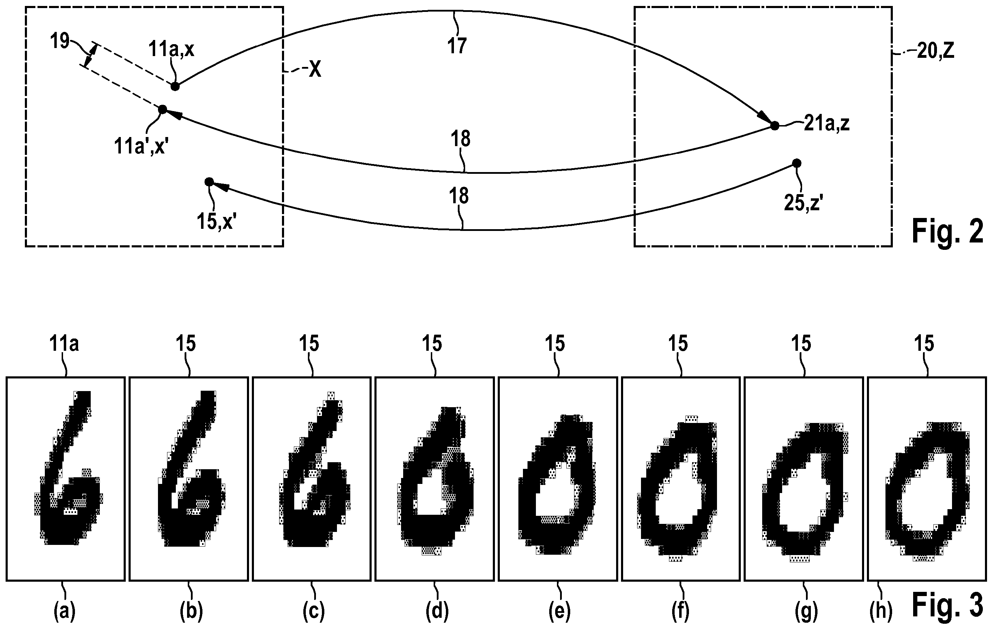

A working space 20 may be chosen in step 115 such that the similarity of samples 11a is correlated to the distance between representations 21a of these samples 11a in the working space 20 to a higher degree than it is correlated to the distance between these samples 11a. This serves to distangle distinct classes from one another and cluster the samples 11a into different classes. The relationship between the data acquisition space X in which the samples 11a live and the working space 20, Z is explained in more detail in Figure 2.

The working space 20, Z may be defined and transforms 17, 18 to and from the data acquisition space X established all in one go according to step 116. This is explained in more detail in Figure 2.

In step 120, the difficulty function 14 is obtained from the samples 11a and the associated labels 13a. For a sample 11a of training input data, and/or for a representation 21a of such a sample 11a in the working space 20, this difficulty function 14 outputs a measure for the difficulty 14a of evaluating this sample 11a with respect to the given problem, such as object classification. According to block 121, a discriminative classifier 16 may be trained, and the difficulty function 14 depends on the classification 16a output for the sample 11a, and/or for its representation 21a.

In step 130, at least one candidate sample 15 of training input data for inclusion into the training data set 11* is obtained. This candidate sample 15 may be obtained directly in the data acquisition space X, or indirectly via the working space 20. Inside box 130, an exemplary way to obtain a candidate sample 15 indirectly via the working space 20 is shown.

In step 131, a search is performed within the working space 20 for a candidate representation 25, such that the criterion 150 for the difficulty 14a is met. In step 132, this candidate representation 25 is transformed into a candidate sample 15 in data acquisition space X where the original samples 11a of training input data live. Two exemplary manners of performing the search 131 are shown in Figure 1.

According to block 131a, an optimization problem is solved inside the working space 20 with respect to a merit function. The merit function is based at least in part on the difficulty function 14 and may additionally be based on the criterion 150 for the difficulty 14a, so as to ensure that an optimum of the merit function guarantees the criterion 150 to be met.

In step 140, the difficulty function 14 is used to calculate a measure for the difficulty 14a of evaluating the candidate sample, and/or the representation thereof, with respect to the problem at hand. That is, the difficulty function may operate in the data acquisition space X or in the working space 20, and it may comprise a mixture of contributions from both spaces.

If the difficulty function 14 makes use of a discriminative classifier 16, then a classification 16a output by this discriminative classifier 16 may also be used to associate the candidate sample 15 with a label, according to block 141.

The difficulty 14a, which may, for example, comprise an ambiguity and/or an entropy in the classification 16a, is checked against a predetermined criterion 150. The criterion 150 may, for example, comprise a threshold value. The criterion 150 may, for example, also comprise a selection of the candidate samples 15 with the "top-n" difficulties 14a from a larger set of candidate samples 15. There is complete freedom as to the criterion 150.

If the criterion 150 is met (truth value 1), then the candidate sample 15 is included in the training data set 11*.

Figure 2 illustrates the relationship and the transforms between the data acquisition space X in which the samples 11a of training input data live on the one hand, and the working space Z, 20 where representations 21a of these samples 11a live on the other hand. The encoder 17 is trained to map samples x, 11a to representations 21a, and the decoder 18 is trained to map representations 21a back to reconstructed samples x', 11a' in X. The encoder 17 and the decoder 18 are trained in a self-consistent manner under the supervision of a discriminator 19 that measures how well the reconstructed samples x', 11a' match the respective original samples x, 11a and is also being trained. The training of the discriminative classifier 16 may be combined with this training, so that the trainings may exchange synergistic effects and the overall computation time is reduced.

As discussed before, a search for a new candidate sample 15 in X may be reduced to a search for a new candidate representation z', 25 in Z. For example, this may be advantageous because a suitable merit function for an optimization exists in Z. The found candidate representation 25 may be transformed to a candidate sample x', 15 in X.

Figure 3 illustrates a smooth transition between classes on the standard MNIST dataset. The MNIST dataset comprises images of handwritten digits from 0 to 9 that are labelled with class labels from 0 to 9 accordingly. The smooth transition was calculated in a working space Z, 20 that was created by training an encoder 17 from X to Z, a decoder 18 from Z to X, and a discriminator 19 to distinguish reconstructed samples 11a' from real samples 11a. The sample 11a that corresponds to picture (a) was then transformed to a representation 21a, z in Z, and there the optimization discussed above as "class-targeted perturbation"

$$z' = z + \arg\min_{\delta} \sum_{i=1}^{c} -y'_i \log C_\gamma(z + \delta)_i$$

Here, the higher the number c that determines the upper limit of the summation, the more the optimization over $\delta$

will bring the newly created representation z' towards a representation of a picture that corresponds to the target class y'. To form pictures (b) to (h) in Figure 3, new representations z' were created with increasing values of c, and these representations z' were transformed back into pictures in X by means of the decoder 18. These pictures correspond to candidate samples 15. A rating of these candidate samples 15 with a difficulty function 14 would most likely reveal that for picture (d), it is hardest to distinguish between whether it represents a digit "6" or a digit "0". Therefore, the corresponding sample 15 lies close to the class boundary in Z between the classes "6" and "0", and this sample 15 would be most probably selected for inclusion in the training data set 11*.

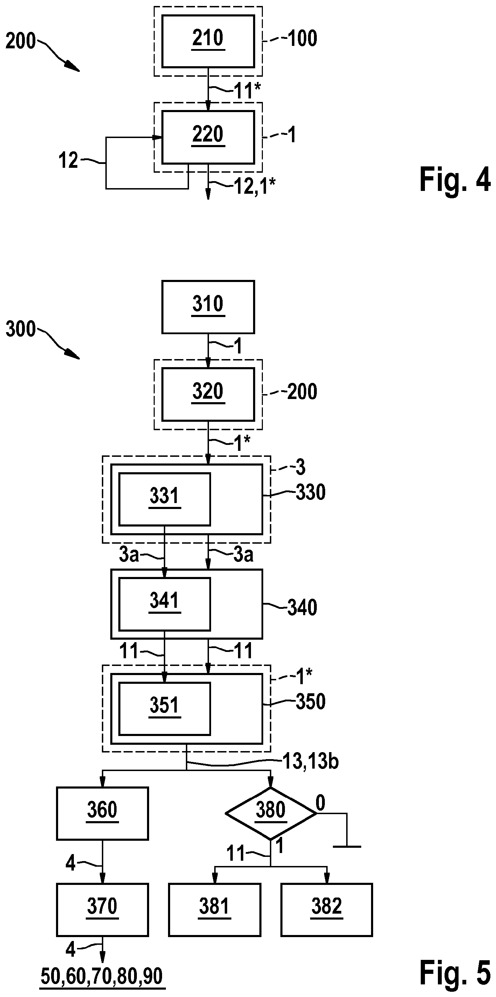

Figure 4 is a flow chart of an exemplary embodiment of the method 200 for training a machine learning module 1. In step 210, the training data set 11* is obtained and/or augmented using the method 100 described in conjunction with Figure 1. In step 220, trainable parameters 12 of the machine learning module 1 are optimized such that output data 13 that the machine learning module 1 best match the labels 13a that are associated with the samples 11a of training input data. This training may be continued until a predetermined termination criterion is reached. At that time, the values of the trainable parameters 12 correspond to those of the fully trained machine learning module 1*.

Figure 5 is an exemplary method for evaluating physical measurement data 3a that has been acquired using at least one sensor 3. In step 310, a machine learning module 1 is provided. In step 320, this machine learning module 1 is trained using the method 200 described in conjunction with Figure 4. In step 330, the physical measurement data 3a is acquired using at least one sensor 3. In step 340, the physical measurement data 3a is provided to the trained machine learning module 1* as input data 11. The machine learning module 1* maps this input data to output data 13 and associated uncertainties 13b.

According to block 331, the physical measurement data 3a may be acquired by multiple sensors 3. According to block 341, the physical measurement data 3a from all the sensors may then be provided to the trained machine learning module 1*, so that respective output data 13 and uncertainties 13b for each sensor 3 result. According to block 351, these respective output data 13 may be fused to a final result based at least in part on the uncertainties 13b. At the output of step 350, the output data 13 and uncertainties 13b look the same no matter whether they are based on input data 11 coming from only one sensor 3 or on input data 11 coming from multiple sensors 3.

Figure 5 shows two exemplary uses of the uncertainties 13b that, using the improved training 200 with the training data set 11* that has been improved according to the method 100, can be determined much more accurately than this was possible according to the prior art.

In step 360, an actuation signal 4 is calculated from the output data according to a strategy that in turn depends on the uncertainties 13b associated with the output data 13. In step 370, the actuation signal 4 is supplied to a vehicle 50, to a classification system 60, to a security surveillance system 70, to a quality control system 80, and/or to a medical imaging system 90.

The uncertainty 13b produced from at least one record of input data 11 may also be checked against a predetermined criterion 380. If this criterion is fulfilled (truth value 1), then, in step 381, the record of input data 11 is stored in a memory for later analysis and/or labelling. Alternatively or in combination, in step 382, it is determined that the record of input data 11 corresponds to a corner case for the problem at hand that requires special attention.

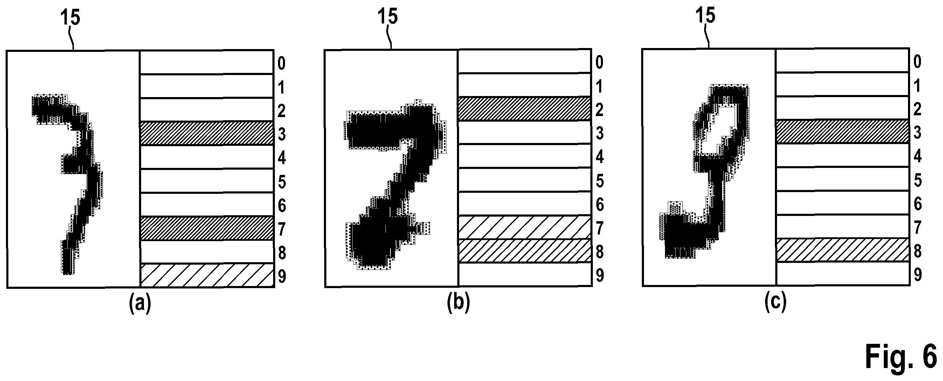

Figure 6 shows three examples of ambiguous candidate samples 15 for inclusion in a training data set 11* that may be used to train a machine learning module 1 to classify the handwritten digits from the MNIST data set. Besides each of the samples 15, the weight distribution of the respective softmax scores for the ten classes "0" to "9" is shown in the form of shadings, where a denser shading corresponds to a higher score.

Picture (a) has features from digits "3", "7" and "9". Picture (b) has features from digits "2", "7" and "8". Picture (c) has features from digits "3" and "8". Even for a human, it is difficult to classify these pictures with a high confidence into one class only. The samples 15 shown in these pictures are therefore good candidates for inclusion in the data set 11*.

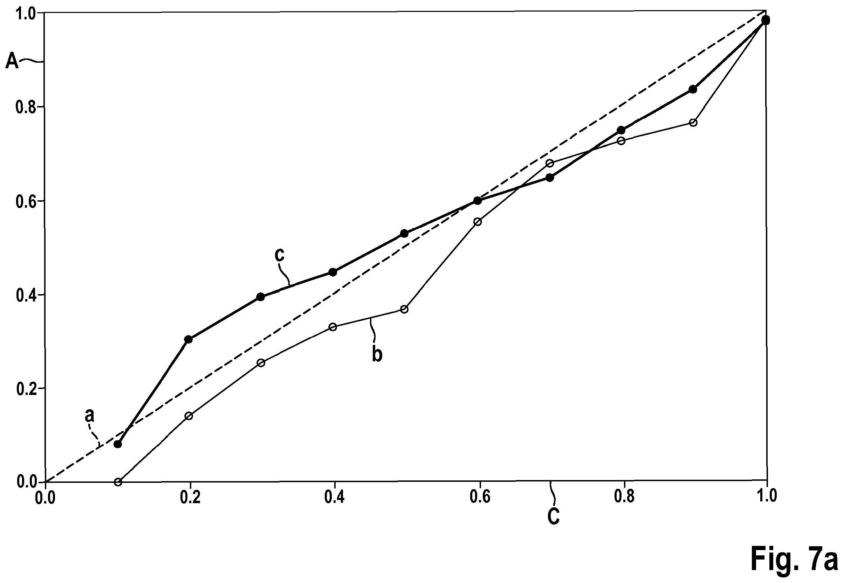

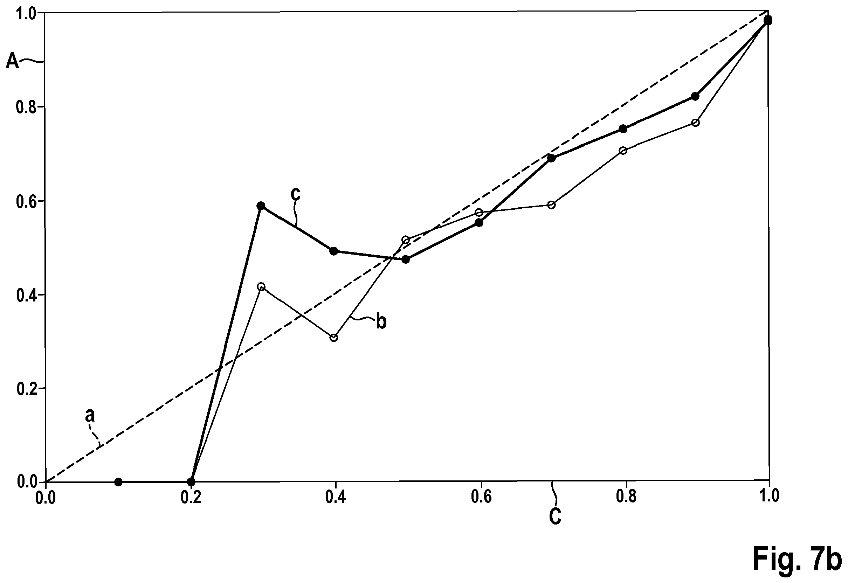

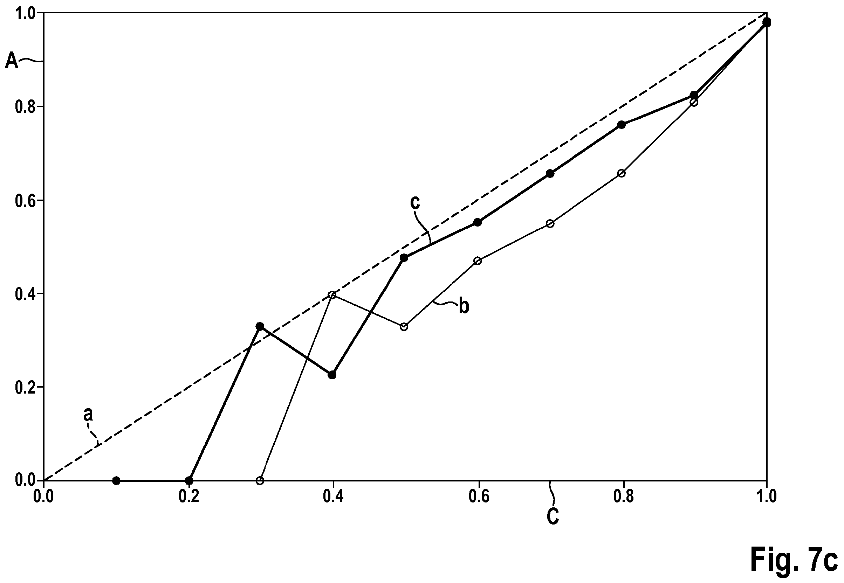

In Figure 7, the confidence C that a machine learning module 1 gives its output data 13 is plotted against the accuracy A that was measured using labelled validation data that had not been part of the training. Figures 7a to 7c are produced according to the same scheme, but for different data sets. In each of Figures 7a to 7c, curve a represents the ideal calibrated state where the confidence C exactly matches the accuracy A. Curve b, when viewed from left to right, represents the progress in a training based on the respective original training data set. Curve c represents the progress in a training based on an augmented training data set 11*.

Figure 7a was created on the E-MNIST data set that contains handwritten letters to be classified into 26 classes from "A" to "Z". Figure 7b was created on the Fashion MNIST data set that contains images of garments to be classified. Figure 7c was created on the MNIST data set.

For all three data sets, an overall trend emerges that curve c is closer to the ideal curve a for most of the time, though there are short sections where curve b is better.

**Claims**

1. A method (200) for training a machine learning module (1), comprising:

   obtaining (210) a training data set (11*) for a machine learning module (1) that is to map input image data (11) to output data (13) with respect to classification of objects within images using a method (100) that comprises:

   • providing (110) samples (11a) of training input data that are associated with labels (13a) in the sense that if the machine learning module (1) maps this sample (11a) of training input data to output data (13) corresponding to the label (13a), this is deemed to be the ground truth with respect to said classification;
   • obtaining (120), from the samples (11a) of training input data and the associated labels (13a), a difficulty function (14) that is configured to map a sample (11a) of training input data, or a representation (21a) thereof in a working space (20), onto a measure for the difficulty (14a) of evaluating this sample (11a) with respect to said classification;
   • obtaining (130) at least one candidate sample (15) of training input data, and/or a representation (25) thereof in the working space (20);
   • calculating (140), by means of the difficulty function (14), a measure for the difficulty (14a) of evaluating this candidate sample (15), and/or the representation (25) thereof, with respect to said classification; and
   • in response to this difficulty meeting a predetermined criterion (150), including (160) the candidate sample (15) in the training data set (11*),

   and further comprising:

   • optimizing (220) trainable parameters (12) of the machine learning module (1) such that output data (13) to which the machine learning module (1) maps the samples (11a) of training input data of the obtained training dataset (11*) best matches the respective labels (13a) associated with the samples (11a) of training input data,

   Wherein

   • the classification comprises mapping each record of input data (11) to a record of output data (13) that indicates, for each class of a set of multiple discrete classes, a probability and/or a confidence that the record of input data (11) belongs to the respective class,
   • the obtaining (120) of the difficulty function (14) comprises training (121), based on the samples (11a) of training input data and the associated labels (13a), a discriminative classifier (16) that maps a sample (11a) of training input data, and/or a representation (21a) thereof in the working space (20), to a classification (16a) indicative of a probability and/or a confidence that this sample (11a) of training input data belongs to each of the discrete classes, and wherein the difficulty (14a) determined by the difficulty function (14) depends on this classification (16a), wherein the difficulty (14a) determined by the difficulty function (14) is based at least in part
   • on an entropy of the classification (16a).

2. The method (100) of claim 1, further comprising: associating (141) the candidate sample (15) with a label corresponding to the classification (16a) determined by the discriminative classifier (16).

3. The method (100) of any one of claims 1 to 2, wherein the working space (20) is chosen (115) such that: the similarity of samples (11a) of training input data with respect to the classification of objects within images is correlated to the same or a higher degree to the distance between representations (21a) of these samples (11a) in the working space (20) than it is correlated to the distance between these samples (11a).

4. The method (100) of claim 3, further comprising: performing (131) a search within the working space (20) for a candidate representation (25) of a candidate sample (15) of training input data such that the difficulty (14a) determined by the difficulty function (14) meets the predetermined criterion (150), and transforming (132) this candidate representation (25) into a candidate sample (15).

5. The method (100) of claim 4, wherein the performing (131) of the search comprises: obtaining (131a), based on a representation (25) in the working space (20), a candidate representation (25) by solving an optimization problem in the working space (20) with respect to a merit function, wherein the merit function is based at least in part on the difficulty function (14).

6. The method (100) of claim 4, wherein the performing (131) of the search comprises drawing (131b) random representations (25) from the working space (20) and evaluating whether these random representations (25) meet the predetermined criterion (150).

7. The method (100) of any one of claims 1 to 6, further comprising: training (116), based on the samples (11a) of training input data, an encoder (17) for transforming these samples (11a) into representations (21a) in the working space (20) and a decoder (18) for reconstructing the samples (11a) from the representations (21a), such that the result (11a') of the reconstructing best matches the respective samples (11a).

8. A method (300) for evaluating physical measurement data (3a), comprising:

   • providing (310) a machine learning module (1);
   • training (320) the machine learning module (1) using the method of claim 1;
   • acquiring (330) the physical measurement data (3a) using at least one sensor (3); and
   • providing (340) the physical measurement data (3a) to the trained machine learning module (1*) as input image data (11), such that the trained machine learning module (1*) maps (350) the input data (11) to output data (13) which is a ground truth with respect to classification of objects within images, and to an associated entropy (13b).

9. The method (300) of claim 8, further comprising:

   • calculating (360), from the output data (13), according to a strategy that depends on the entropy (13b) associated with the output data (13), an actuation signal (4); and
   • supplying (370) the actuation signal (4) to a vehicle (50), to a classification system (60), to a security surveillance system (70), to a quality control system (80), and/or to a medical imaging system (90).

10. The method (300) of any one of claims 8 to 9, further comprising, in response to the entropy (13b) produced from at least one record of input data (11) meeting a predetermined criterion (380):

   • storing (381) the record of input data (11) in a memory for later analysis and/or labelling; and/or
   • determining (382) that the record of input data (11) corresponds to a corner case with respect to said classification problem to be solved by the machine learning module (1).

11. A computer program, comprising machine-readable instructions that, when executed by one or more computers, cause the one or more computers to perform a method (100, 200, 300) according to any one of claims 1 to 10.

12. A non-transitory storage medium and/or a downloadable product with the computer program of claim 11.

13. A computer with the computer program of claim 11, and/or with the non-transitory storage medium and/or downloadable product of claim 12.


**Patentansprüche**

1. Verfahren (200) zum Trainieren eines Maschinenlernmoduls (1), umfassend:

   Erhalten (210) eines Trainingsdatensatzes (11*) für ein Maschinenlernmodul (1), der Eingabebilddaten (11) auf Ausgabedaten (13) in Bezug auf eine Klassifizierung von Objekten innerhalb von Bildern unter Verwendung eines Verfahrens (100) abbilden soll, das Folgendes umfasst:

   • Bereitstellen (110) von Proben (11a) von Trainingseingabedaten, die mit Labels (13a) in dem Sinne assoziiert sind, dass, wenn das Maschinenlernmodul (1) diese Probe (11a) von Trainingseingabedaten auf Ausgabedaten (13) abbildet, die dem Label (13a) entsprechen, dies als die Ground Truth in Bezug auf die Klassifizierung angesehen wird;
   • Erhalten (120), aus den Proben (11a) von Trainingseingabedaten und den assoziierten Labels (13a), einer Schwierigkeitsfunktion (14), die dazu ausgelegt ist, eine Probe (11a) von Trainingseingabedaten, oder eine Repräsentation (21a) davon, in einem Arbeitsraum (20) auf ein Maß für die Schwierigkeit (14a) des Evaluierens dieser Probe (11a) in Bezug auf die Klassifizierung abzubilden;

• Erhalten (130) mindestens einer Kandidatenprobe (15) von Trainingseingabedaten und/oder einer Repräsentation (25) davon in dem Arbeitsraum (20);

• Berechnen (140), mittels der Schwierigkeitsfunktion (14), eines Maßes für die Schwierigkeit (14a) des Evaluierens dieser Kandidatenprobe (15), und/oder der Repräsentation (25) davon, in Bezug auf diese Klassifizierung; und

• als Reaktion darauf, dass diese Schwierigkeit ein vorbestimmtes Kriterium (150) erfüllt, Einschließen (160) der Kandidatenprobe (15) in den Trainingsdatensatz (11*), und ferner umfassend:

• Optimieren (220) trainierbarer Parameter (12) des Maschinenlernmoduls (1), sodass Ausgabedaten (13), auf die das Maschinenlernmodul (1) die Proben (11a) von Trainingseingabedaten des erhaltenen Trainingsdatensatzes (11*) abbildet, am besten mit den jeweiligen Labels (13a) übereinstimmen, die mit den Proben (11a) von Trainingseingabedaten assoziiert sind,

wobei

• die Klassifizierung das Abbilden jedes Datensatzes von Eingabedaten (11) auf einen Datensatz von Ausgabedaten (13) umfasst, der für jede Klasse eines Satzes von mehreren diskreten Klassen eine Wahrscheinlichkeit und/oder eine Konfidenz angibt, dass der Datensatz von Eingabedaten (11) zu der jeweiligen Klasse gehört,

• das Erhalten (120) der Schwierigkeitsfunktion (14) das Trainieren (121), basierend auf den Proben (11a) von Trainingseingabedaten und den assoziierten Labels (13a), eines diskriminativen Klassifizierers (16) umfasst, der eine Probe (11a) von Trainingseingabedaten, und/oder einer Repräsentation (21a) davon in dem Arbeitsraum (20), auf eine Klassifizierung (16a) abbildet, die eine Wahrscheinlichkeit und/oder eine Konfidenz angibt, dass diese Probe (11a) von Trainingseingabedaten zu jeder der diskreten Klassen gehört, und wobei die Schwierigkeit (14a), die durch die Schwierigkeitsfunktion (14) bestimmt wird, von dieser Klassifizierung (16a) abhängt, wobei die durch die Schwierigkeitsfunktion (14) bestimmte Schwierigkeit (14a) zumindest teilweise basiert

• auf einer Entropie der Klassifizierung (16a).

2. Verfahren (100) nach Anspruch 1, ferner umfassend: Assoziieren (141) der Kandidatenprobe (15) mit einem Label, das der Klassifizierung (16a) entspricht, die durch den diskriminativen Klassifizierer (16) bestimmt wird.

3. Verfahren (100) nach einem der Ansprüche 1 bis 2, wobei der Arbeitsraum (20) so gewählt wird (115), dass: die Ähnlichkeit von Proben (11a) von Trainingseingabedaten in Bezug auf die Klassifizierung von Objekten innerhalb von Bildern mit dem gleichen oder einem höheren Grad mit dem Abstand zwischen Repräsentationen (21a) dieser Proben (11a) in dem Arbeitsraum (20) korreliert wird als mit dem Abstand zwischen diesen Proben (11a) korreliert wird.

4. Verfahren (100) nach Anspruch 3, ferner umfassend: Durchführen (131) einer Suche innerhalb des Arbeitsraums (20) nach einer Kandidatenrepräsentation (25) einer Kandidatenprobe (15) von Trainingseingabedaten, sodass die durch die Schwierigkeitsfunktion (14) bestimmte Schwierigkeit (14a) das vorbestimmte Kriterium (150) erfüllt, und Transformieren (132) dieser Kandidatenrepräsentation (25) in eine Kandidatenprobe (15).

5. Verfahren (100) nach Anspruch 4, wobei das Durchführen (131) der Suche Folgendes umfasst: Erhalten (131a), basierend auf einer Repräsentation (25) in dem Arbeitsraum (20), einer Kandidatenrepräsentation (25) durch Lösen eines Optimierungsproblems in dem Arbeitsraum (20) in Bezug auf eine Bewertungsfunktion, wobei die Bewertungsfunktion zumindest teilweise auf der Schwierigkeitsfunktion (14) basiert.

6. Verfahren (100) nach Anspruch 4, wobei das Durchführen (131) der Suche das Zeichnen (131b) von Zufallsrepräsentationen (25) aus dem Arbeitsraum (20) und das Evaluieren, ob diese Zufallsrepräsentationen (25) das vorbestimmte Kriterium (150) erfüllen, umfasst.

7. Verfahren (100) nach einem der Ansprüche 1 bis 6, ferner umfassend: Trainieren (116), basierend auf den Proben (11a) von Trainingseingabedaten, eines Encoders (17) zum Transformieren dieser Proben (11a) in Repräsentationen (21a) in dem Arbeitsraum (20) und eines Decoders (18) zum Rekonstruieren der Proben (11a) aus den Repräsentationen (21a), sodass das Ergebnis (11a') des Rekonstruierens am besten mit den jeweiligen Proben (11a) übereinstimmt.

8. Verfahren (300) zum Evaluieren physikalischer Messdaten (3a), umfassend:

• Bereitstellen (310) eines Maschinenlernmoduls (1);
• Trainieren (320) des Maschinenlernmoduls (1) unter Verwendung des Verfahrens nach Anspruch 1;
• Erfassen (330) der physikalischen Messdaten (3a) unter Verwendung mindestens eines Sensors (3); und
• Bereitstellen (340) der physikalischen Messdaten (3a) an das trainierte Maschinenlernmodul (1*) als Eingabebilddaten (11), sodass das trainierte Maschinenlernmodul (1*) die Eingabedaten (11) auf Ausgabedaten (13), die eine Ground Truth in Bezug auf die Klassifizierung von Objekten innerhalb von Bildern sind, und auf eine assoziierte Entropie (13b) abbildet (350).

9. Verfahren (300) nach Anspruch 8, ferner umfassend:

• Berechnen (360), aus den Ausgabedaten (13), gemäß einer Strategie, die von der Entropie (13b) abhängt, die mit den Ausgabedaten (13) assoziiert ist, eines Betätigungssignals (4); und
• Liefern (370) des Betätigungssignals (4) an ein Fahrzeug (50), an ein Klassifizierungssystem (60), an ein Sicherheitsüberwachungssystem (70), an ein Qualitätskontrollsystem (80) und/oder an ein medizinisches Bildgebungssystem (90).

10. Verfahren (300) nach einem der Ansprüche 8 bis 9, ferner umfassend, als Reaktion darauf, dass die Entropie (13b), die aus mindestens einem Datensatz von Eingabedaten (11) erzeugt wird, ein vorbestimmtes Kriterium erfüllt (380):

• Speichern (381) des Datensatzes von Eingabedaten (11) in einem Speicher für eine spätere Analyse und/oder ein späteres Labeling; und/oder
• Bestimmen (382), dass der Datensatz von Eingabedaten (11) einem Eckfall in Bezug auf das Klassifizierungsproblem entspricht, das durch das Maschinenlernmodul (1) zu lösen ist.

11. Computerprogramm, das maschinenlesbare Anweisungen umfasst, die, wenn sie durch einen oder mehrere Computer ausgeführt werden, bewirken, dass der eine oder die mehreren Computer ein Verfahren (100, 200, 300) nach einem der Ansprüche 1 bis 10 durchführen.

12. Nichtflüchtiges Speichermedium und/oder herunterladbares Produkt mit dem Computerprogramm nach Anspruch 11.

13. Computer mit dem Computerprogramm nach Anspruch 11 und/oder mit dem nichtflüchtigen Speichermedium und/oder dem herunterladbaren Produkt nach Anspruch 12.

**Revendications**

1. Procédé (200) d'entraînement d'un module d'apprentissage automatique (1), comprenant : l'obtention (210) d'un ensemble de données d'apprentissage (11*) pour un module d'apprentissage automatique (1) devant mettre en correspondance des données d'image d'entrée (11) avec des données de sortie (13) vis-à-vis d'une classification d'objets au sein d'images, à l'aide d'un procédé (100) qui comprend :

• la fourniture (110) d'échantillons (11a) de données d'entrée d'apprentissage associées à des étiquettes (13a) au sens où, si le module d'apprentissage automatique (1) met en correspondance cet échantillon (11a) de données d'entrée d'apprentissage avec des données de sortie (13) correspondant à l'étiquette (13a), cela est considéré comme étant la vérité terrain vis-à-vis de ladite classification ;
• l'obtention (120), à partir des échantillons (11a) de données d'entrée d'apprentissage et des étiquettes (13a) associées, d'une fonction de difficulté (14) configurée pour mettre en correspondance un échantillon (11a) de données d'entrée d'apprentissage, ou une représentation (21a) de celui-ci dans un espace de travail (20), avec une mesure de la difficulté (14a) d'évaluer cet échantillon (11a) vis-à-vis de ladite classification ;
• l'obtention (130) d'au moins un échantillon candidat (15) de données d'entrée d'apprentissage, et/ou d'une représentation (25) de celui-ci dans l'espace de travail (20) ;
• le calcul (140), au moyen de la fonction de difficulté (14), d'une mesure de la difficulté (14a) d'évaluer cet échantillon candidat (15), et/ou sa représentation (25), vis-à-vis de ladite classification ; et
• en réponse au fait que cette difficulté satisfait à un critère prédéterminé (150), l'inclusion (160) de l'échantillon candidat (15) dans l'ensemble de données d'apprentissage (11*), et comprenant en outre :
• l'optimisation (220) de paramètres d'apprentissage (12) du module d'apprentissage automatique (1) de telle sorte que des données de sortie (13), avec lesquelles le module d'apprentissage automatique (1) met en correspondance les échantillons (11a) de données d'entrée d'apprentissage de l'ensemble de données d'apprentissage (11*) obtenu, concordent le mieux avec les étiquettes (13a) respectives associées aux échantillons (11a) de données d'entrée d'apprentissage,

dans lequel

• la classification comprend la mise en correspondance de chaque enregistrement de données d'entrée (11) avec un enregistrement de données de sortie (13) indiquant, pour chaque classe d'un ensemble de multiples classes discrètes, une probabilité et/ou une confiance que l'enregistrement de données d'entrée (11) appartienne à la classe respective,
• l'obtention (120) de la fonction de difficulté (14) comprend l'entraînement (121), sur la base des échantillons (11a) de données d'entrée d'apprentissage et des étiquettes (13a) associées, d'un classificateur discriminant (16) qui met en correspondance un échantillon (11a) de données d'entrée d'apprentissage, et/ou une représentation (21a) de celui-ci dans l'espace de travail (20), avec une classification (16a) indicative d'une probabilité et/ou d'une confiance que cet échantillon (11a) de données d'entrée d'apprentissage appartienne à chacune des classes discrètes, et dans lequel la difficulté (14a) déterminée par la fonction de difficulté (14) dépend de cette classification (16a), dans lequel

la difficulté (14a) déterminée par la fonction de difficulté (14) est basée au moins en partie

• sur une entropie de la classification (16a).

2. Procédé (100) selon la revendication 1, comprenant en outre : l'association (141) de l'échantillon candidat (15) à une étiquette correspondant à la classification (16a) déterminée par le classificateur discriminant (16).

3. Procédé (100) selon l'une quelconque des revendications 1 à 2, dans lequel l'espace de travail (20) est choisi (115) de telle sorte que : la similitude d'échantillons (11a) de données d'entrée d'apprentissage vis-à-vis de la classification d'objets au sein d'images est corrélée à un degré identique ou supérieur à la distance entre des représentations (21a) de ces échantillons (11a) dans l'espace de travail (20), qu'elle n'est corrélée à la distance entre ces échantillons (11a).

4. Procédé (100) selon la revendication 3, comprenant en outre : l'exécution (131) d'une recherche dans l'espace de travail (20) d'une représentation candidate (25) d'un échantillon candidat (15) de données d'entrée d'apprentissage de telle sorte que la difficulté (14a) déterminée par la fonction de difficulté (14) satisfait au critère prédéterminé (150), et la transformation (132) de cette représentation candidate (25) en un échantillon candidat (15).

5. Procédé (100) selon la revendication 4, dans lequel l'exécution (131) de la recherche comprend : l'obtention (131a), sur la base d'une représentation (25) dans l'espace de travail (20) d'une représentation candidate (25) en résolvant un problème d'optimisation dans l'espace de travail (20) vis-à-vis d'une fonction de mérite, dans lequel la fonction de mérite est basée au moins en partie sur la fonction de difficulté (14).

6. Procédé (100) selon la revendication 4, dans lequel l'exécution (131) de la recherche comprend le tirage (131b) de représentations aléatoires (25) dans l'espace de travail (20) et le fait d'évaluer si ces représentations aléatoires (25) satisfont au critère prédéterminé (150).

7. Procédé (100) selon l'une quelconque des revendications 1 à 6, comprenant en outre : l'entraînement (116), sur la base des échantillons (11a) de données d'entrée d'apprentissage, d'un codeur (17) servant à transformer ces échantillons (11a) en représentations (21a) dans l'espace de travail (20) et d'un décodeur (18) servant à reconstruire les échantillons (11a) à partir des représentations (21a), de telle sorte que le résultat (11a') de la reconstruction concorde le mieux avec les échantillons (11a) respectifs.

8. Procédé (300) d'évaluation de données de mesure physique (3a), comprenant :

• la fourniture (310) d'un module d'apprentissage automatique (1) ;
• l'entraînement (320) du module d'apprentissage automatique (1) à l'aide du procédé selon la revendication 1 ;
• l'acquisition (330) des données de mesure physique (3a) au moyen d'au moins un capteur (3) ; et
• la fourniture (340) des données de mesure physique (3a) au module d'apprentissage automatique entraîné (1*) en tant que donnée d'images d'entrée (11), de telle sorte que le module d'apprentissage automatique entraîné (1*) met en correspondance (350) les données d'entrée (11) avec des données de sortie (13), lesquelles constituent une vérité terrain vis-à-vis d'une classification d'objets au sein d'images, et avec une entropie associée (13b).

9. Procédé (300) selon la revendication 8, comprenant en outre :

   • le calcul (360), à partir des données de sortie (13), selon une stratégie qui dépend de l'entropie (13b) associée aux données de sortie (13), d'un signal d'actionnement (4) ; et
   • la fourniture (370) du signal d'actionnement (4) à un véhicule (50), à un système de classification (60), à un système de surveillance de sécurité (70), à un système de contrôle de qualité (80), et/ou à un système d'imagerie médicale (90).

10. Procédé (300) selon l'une quelconque des revendications 8 à 9, comprenant en outre, en réponse au fait que l'entropie (13b) produite à partir d'au moins un enregistrement de données d'entrée (11) satisfait à un critère prédéterminé (380) :

   • le stockage (381) de l'enregistrement de données d'entrée (11) dans une mémoire pour une analyse et/ou un étiquetage ultérieurs ; et/ou
   • la détermination (382) du fait que l'enregistrement de données d'entrée (11) correspond à un cas limite vis-à-vis dudit problème de classification devant être résolu par le module d'apprentissage automatique (1).

11. Programme informatique, comprenant des instructions lisibles par machine qui, lorsqu'elles sont exécutées par un ou plusieurs ordinateurs, amènent l'ordinateur ou les ordinateurs à mettre en œuvre un procédé (100, 200, 300) selon l'une quelconque des revendications 1 à 10.

12. Support de stockage non transitoire et/ou produit téléchargeable doté du programme informatique selon la revendication 11.

13. Ordinateur doté du programme informatique selon la revendication 11, et/ou doté du support de stockage non transitoire et/ou du produit téléchargeable selon la revendication 12.

**Fig. 1**

**Fig. 2**

**Fig. 3**

Fig. 4

Fig. 5

Fig. 6

Fig. 7a

EP 3 786 845 B1

Fig. 7b

EP 3 786 845 B1

Fig. 7c

**EP 3 786 845 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019122120 A1
- US 2018373963 A1